# EUROPEAN PATENT SPECIFICATION

(11) **EP 1 589 471 B1**
(45) Date of publication and mention of the grant of the patent: **24.09.2008**
(21) Application number: 05252560.7
(22) Date of filing: 25.04.2005
(51) Int. Cl.: G06K 19/07, G06K 7/10

(54) **ID tag, tag reader, ID scrambling and descrambling methods, and tag manager**
Identifikationsetikett, Etikettenlesegerät, Verfahren zur Identifikationsverschlüsselung und -entschlüsselung, und Etikettenverwaltung
Etiquette d'identification, lecteur d'étiquettes, procédé d'embrouillage et désembrouillage de l'identification, et gestionnaire d'étiquettes

(30) Priority: 23.04.2004 JP 2004128834
(43) Date of publication of application: 26.10.2005
(73) Proprietor: NTT DoCoMo, Inc., Tokyo 100-6150 (JP)
(72) Inventor: Ohkubo, Shinzo, NTT DoCoMo, Inc. I.P.D., Chiyoda-ku, Tokyo 100-6150 (JP); Suda, Hirohito, NTT DoCoMo, Inc. I.P.D., Chiyoda-ku, Tokyo 100-6150 (JP)
(74) Representative: Maury, Richard Philip

(56) References cited:
- EP-A- 1 469 408
- US-A- 5 450 492
- US-A1- 2001 025 887
- US-A1- 2002 087 867
- US-A1- 2002 110 242
- US-A1- 2003 209 601
- US-A1- 2004 025 035
- US-A1- 2004 031 857

## Description

The present invention generally relates to a system comprising an ID tag and a tag manager. The tag manager may be utilized in mobile; communication systems.

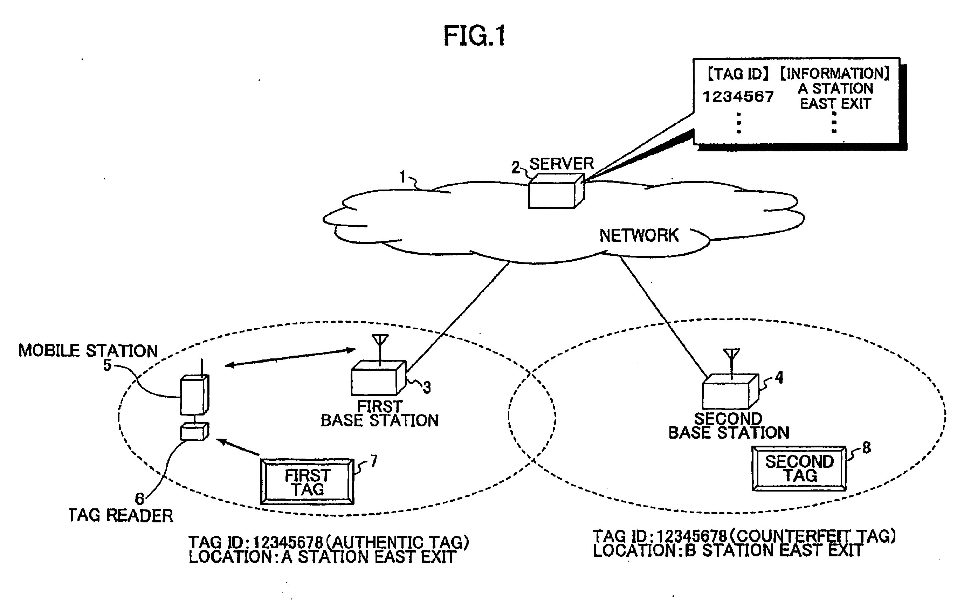

RFID tags are well known in this art as disclosed in, for example, Patent Documents #1, #2 and #3 below, which can be applied to mobile communication systems. An example of such an RFID system is shown in Fig. 1.

In Fig. 1, an authentic first tag 7 transmits its own tag ID as it is without concealing the tag ID. The first tag 7 is placed at a fixed location. The tag ID of the first tag 7 and information about the first tag 7 are correlated and held in a server 2. In this manner, the server 2 can provide a service in which the location information of the first tag 7 is provided to a mobile station 5. Other types of services reflating to the location of tags are also available.

In such a location notifying service, the first tag 7 is placed at A station East exit. The tag ID of the first tag 7 and the location information of the first tag 7 are correlated and held in the server 2. When a reader 6 coupled to or integrated with the mobile station 5 moves close to the first tag 7, the reader 6 receives tag ID information transmitted from the first tag 7.

The reader 6 outputs the received tag ID information to the mobile station 6. The mobile station 6 extracts a tag ID ("12345678" in the example shown in Fig. 1) from the received tag information, sends information obtained from the first tag ID 7 to the server 2 via a first base station 3 and a network together with an inquiry as to where the first tag 7 is located. As mentioned above, the server 2 holds information of "A station East exit" correlated to the tag ID of the first tag 7, and answers to the mobile station 5 "A station East exit".

Accordingly, the user of the mobile station 5 recognizes that he is now at the East exit of A station.

A counterfeit tag (a second tag 8 in Fig. 1) transmitting the same ID "12345678" as the first tag 7 is located at B station East exit. If the mobile station 5 moves close to the second tag 8 and receives the ID of the tag 8, the same information "A station East exit" is provided to the mobile station 5. Although the user is actually at the East exit of B station, the user receives wrong information "A station East exit". If many counterfeit tags like this are placed at many places, the location notifying service becomes unreliable.

In another available service, a user having a mobile station with tag reader function can monitor an ID transmitted from a tag attached to his wallet to always know where the wallet is, and he can notice that he forgot or dropped the wallet. Such a tag transmits a constant ID. Therefore, someone can detect the constant ID and know where the tag holding person is, which may invade individual privacy.
[Patent Document #1]
Japanese Laid-open, No. 2003-524242
[Patent Document #2]
Japanese Laid-Open No. 2002-533846
[Patent Document #3]
Japanese Laid-Open No. 2000-224219

EP-A-1469408, relevant only under EPC Art 54(3), discloses a pharmaceutical tracking system having a server and which authenticates tags attached to packaging of pharmaceutical products.

The invention providers a system as defined in Claim 1.

The present invention can recognize counterfeit tags and avoid service degradation and privacy invasion.

### BRIEF DESCRIPTION OF THE DRAWINGS

Fig. 1 schematically shows a conventional RFID system employing RAPID tags;
Fig. 2 is a block diagram showing an ID tag and a tag reader;
Fig. 3 shows a data string;
Fig. 4 is a block diagram showing an ID tag;
Fig. 5 is a block diagram showing a tag reader;
Fig. 6 shows division methods;
Fig. 7 is a block diagram showing an alternative ID tag;
Fig. 8 schematically shows an RFID system according to an embodiment of the present invention;
Fig. 9 is a block diagram showing an ID tag and a tag reader, in which changes of the tag ID are recognized;
Fig. 10 is a flowchart showing a procedure of correcting a timer in the tag reader;
Fig. 11 is a block diagram showing an ID tag and a tag reader using CRC; and
Fig. 12 is a flowchart showing operations of the ID tag and the tag reader.

### DESCRIPTION OF THE PREFERRED EMBODIMENTS

The following is a description of ID tags, tag reader, tag ID transmission methods, ID tag recovering methods, and tag managers.

Throughout all the figures, members and parts having the same or similar functions are assigned the same or similar reference numerals or symbols, and redundant explanations are omitted.

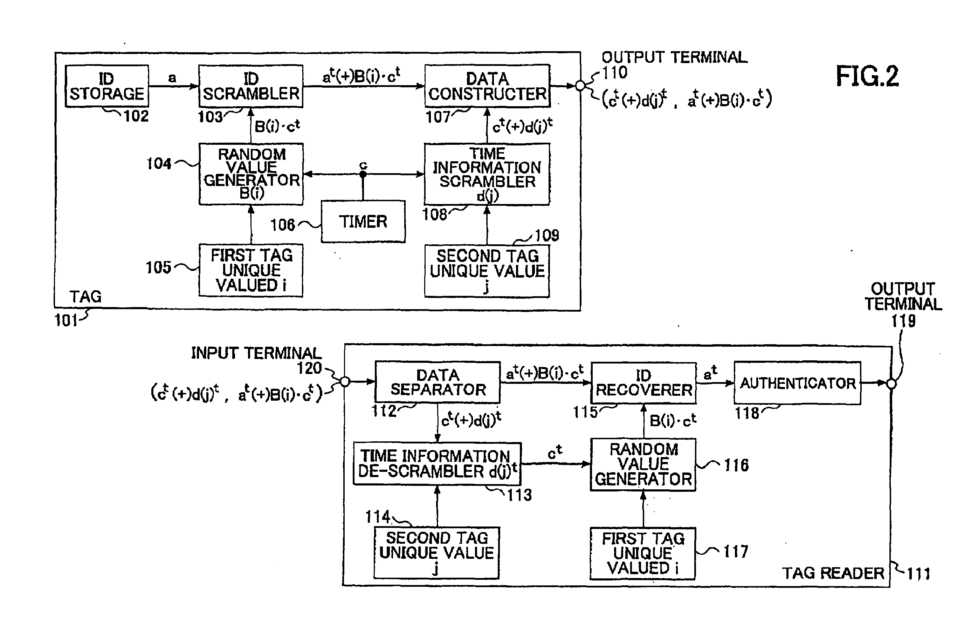

Apparatus outside the scope of the invention will first be described, to assist in understanding the invention, with reference to Figures 2 to 7 and 9-12.

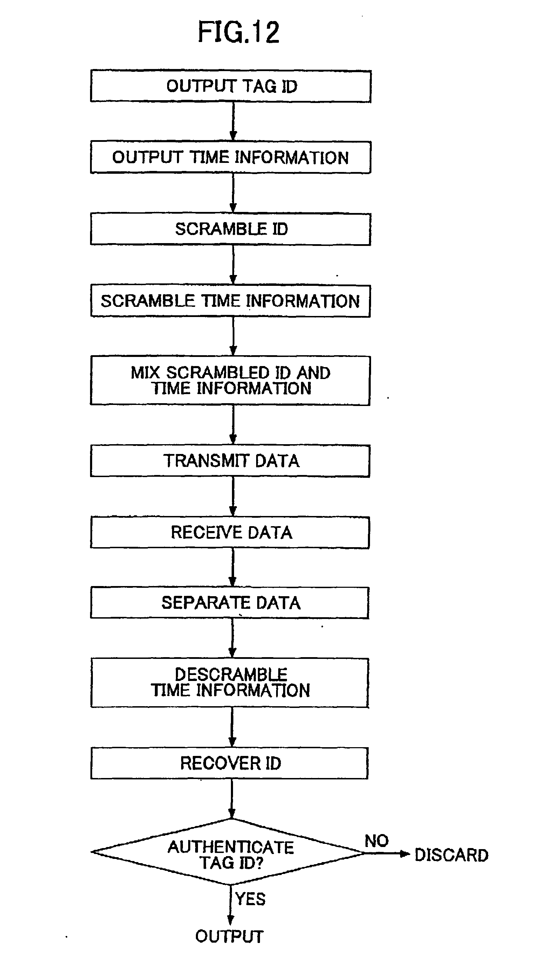

A first system is explained below with reference to Fig. 2 and Fig. 12.

Fig. 2 is a block diagram generally showing an ID tag and a tag reader.

Fig. 12 is a flow chart generally showing operations in the ID tag and the tag reader.

The ID tag 101 comprises an ID storage 102, an ID scrambler 103, a random value generator 104, a first tag unique value 105, a timer 106, a data constructor 107, a time information scrambler 108, a second tag unique value 109 and an output terminal 110.

In each tag 101, a predetermined unique tag ID is stored in the ID storage 102. Each tag can be identified by using this ID. An RF ID tag is typical for an RF transmission tag, but the present invention can be applied to the ID tag systems utilizing visible light and infrared-rays.

Two unique values of the first tag unique value 105 and the second tag unique value 109 are previously given to each tag 101. These tag unique values are not related to a tag ID mentioned below, and can be determined at random. The tag unique values do not have to be different from each other, but should be kept secret from persons other than readers and servers having authenticating functions. As for tags held by a mobile user, the "other person" means any person other than the mobile user. As for tags located at a predetermined location for providing location related services, the "other person" means any entity other than the provider of the services. In a tag, the first tag unique value and the second tag unique value may be the same, but when these values are different from each other, their security becomes higher because the decryption has to be done twice.

The first tag unique value 105 given to the tag 101 is input from the ID storage 102 to the random value generator 104. In the random value generator 104, using variables dependent on the first tag unique value 105, time information output from the timer 106 is converted to a random value dependent on time. As such randomizing operation processes, complex operational processes such as remainder calculation by generating a polynomial or bit permutation based on a matrix can be performed. More specifically, the random value generator 104 generates a matrix or vector uniquely corresponding to the first tag unique value 105, and can bit-permute the time information output from the timer 106 utilizing the matrix or can calculate remainders of division by the vector. The randomization is an example of concealing. In the present Specification and Claims, the "time" means not only an absolute time but also a counter for counting up by a time duration (such as one minute, one hour, one day, etc.) and the like, and the "time information" means an amount of the absolute time and a value in the counter and the like.

The generated random value dependent on time is input to the ID scrambler 103. In the ID scrambler 103, the ID of the tag 101 output from the ID storage 102 is scrambled with the random value. The scrambling process may include bit-to-bit exclusive OR operations between two input values. Scrambling is one example of concealing. Since the time information is employed, the resultant values are not constant even without any complex calculation, and have regularity, because of which the transmitted time information can be easily recovered in a receiver.

The scrambled tag ID is output to the data constructor 107 and subjected to additional processing mentioned below in the data constructor 107.

On the other hand, the second tag unique value 109 given to the tag 101 is input to the time information scrambler 108. In the time information scrambler 108, the time information output from the timer 106 is scrambled with the second tag unique value 109. Scrambling is one example of concealing. As an example of scrambling processing, a bit string uniquely corresponding to the second tag unique value 109 can be generated, and bit-to-bit exclusive OR operations are done between the bit string and the time information output from the timer 106.

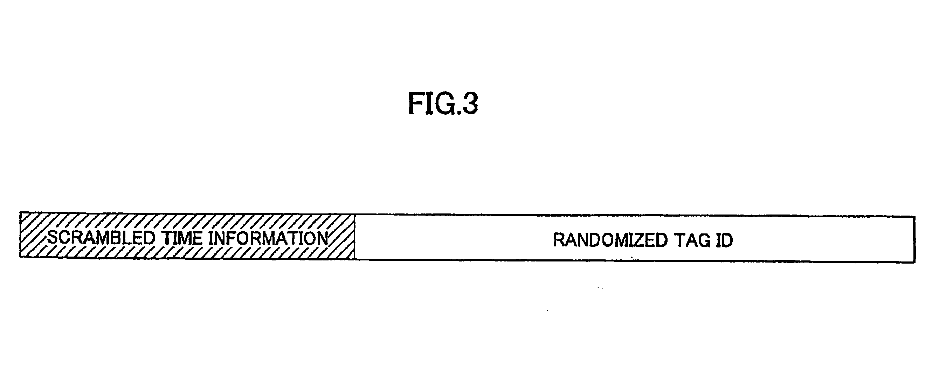

The scrambled time information is input to the data constructor 107. In the data constructor 107, the scrambled time information is added to the scrambled tag ID to construct one data string as shown in Fig. 3. The constructed data string is output via the output terminal 110 to the outside of the tag 101.

The operating process in the tag 101 is explained using alpha expressions.

In the random value generator 104, the first unique value "i" is randomized with the time information c output from the timer 106, to obtain B (i) c^{t}. In the ID scrambler 103, the tag ID "a" is scrambled with the random value B(i)c^{t}, to obtain the scrambled tag ID a^{t}(+)B(i)c^{t}. On the other hand, in the time information scrambler 108, the time information "c" is scrambled with a scrambling vector d(j) dependent on the second tag unique value "j", to obtain the scrambled time information c^{t}(+)d(j)^{t}. The data string (c^{t}(+)d(j)^{t} , a^{t}(+)B(i)c^{t} ) mixing those two data items is output from the data constructor 107. B(i) means conversion matrix in the random value generator 104, (+) means exclusive OR and "t" means translocation.

Next, a tag reader 111 receiving the tag ID from the tag 101 is explained.

The tag reader 111 comprises an input terminal 120, a data separator 112, a time information descrambler 113, a second tag unique value 114, an ID recoverer 115, a random value generator 116, a first tag unique value 117, an authenticator 118 and an output terminal 119.

The tag reader 111 is also previously given the first tag unique value 117 and the second tag unique value 114, which are the same as the first tag unique value 105 and the second tag unique value 109 given to the tag 101, respectively.

One method of registering the tag unique values in the tag reader 111 held by an individual is that the individual previously registers the tag unique values of the tag 101 into the tag reader 111. As for a tag placed at a specific location, a tag unique value can be downloaded or provided via a mobile station from a tag manager such as a server and registered into the tag reader.

Data from the tag 101 received through the input terminal 120 is input to the data separator 112. The data separator 112 performs an operation inverse to that of the data constructor 107 of the tag 101, to separate or divide the received data into the scrambled time information and the scrambled tag ID. The scrambled time information is input to the time information descrambler 113, and the scrambled tag ID is input to the ID recoverer 115. The time information descrambler 113 performs an operation (descrambling) inverse to that of the time information scrambler 108 of the tag 101, using the second tag unique value 114 to extract the time information.

The extracted time information is input to the random value generator 116. Similar to the random value generator 104, the random value generator 116 converts the input time information to a value dependent on time, using the first tag unique value 117.

The random value obtained in the random value generator 116 is input to the ID recoverer 115. The ID recoverer 115 performs an operation inverse to that of the ID scrambler 103 of the tag 101, to convert the scrambled tag ID to the original tag ID.

The recovered tag ID is input to the authenticator 118. The authenticator 118 compares the previously stored tag ID and the recovered tag ID to determine authentication. If the tag ID transmitted by the tag 101 is incorrect, authentication is denied. Further, if the unique values used in the tag 101 transmitting the tag ID are incorrect, the recovered tag ID becomes incorrect, and then authentication is also denied. Accordingly, only when both the tag ID and the unique values are correct, authentication is affirmed. In this manner, authentication is performed by confirming whether the combination of the tag ID and the unique values are correct.

A tag ID determined to be authentic is output through the output terminal 119. A tag ID determined to be not authentic is discarded.

The operations process in the tag reader 111 is explained using alpha expressions.

The data separator 112 receives the data string (c^{t}(+)d(j)^{t},a^{t}(+)B(i)c^{t}), and separates the data. The separated scrambled time information c^{t}(+)d(j)^{t} is input to the time information descrambler 113 and the separated scrambled tag ID a^{t}(+)B(i)c^{t} is input to the ID recoverer 115. The time information descrambler 113 uses the second tag unique value "j" and descrambles the scrambled time information c^{t}(+)d(j)^{t} to (c^{t}(+)d(j)^{t})(+)d(j)^{t} = c^{t}, to extract the time information c^{t}, which is input to the random value generator 116. The random value generator 116 uses the input time information c^{t} and randomizes the first tag unique value "i" to obtain B(i)c^{t}.

The scrambled tag ID (a^{t}(+)B(i)c^{t}) is input from the data separator 112 to the ID recoverer 115. In the ID recoverer 115, the scrambled tag ID (a^{t}(+)B(i)c^{t}) is descrambled with B(i)c^{t}, to extract the recovered tag ID a^{t}, which is output to the authenticator 118.

In the above explained method, the tag ID and the time informations are both transmitted each time as shown in Fig. 3. However, by recognizing changes of the randomized tag ID, it is possible to eliminate the transmission of the time information. When registering tag unique values into the tag reader, the tag reader can be synchronized with the tag by resetting counters in the tag and tag reader. After: synchronization, the tag reader can recognize the counter value of the tag. Both counters are becoming offset as time goes by. However, since this offset does not appear so suddenly or drastically, the tag reader can recognize the changes of the scrambled ID sent from the tag. Therefore, the tag reader can compensate for the offset between the two counters. In such an alternative, tag reader can correctly recover the ID randomized with the time information even without transmitting the time information each time, as explained below.

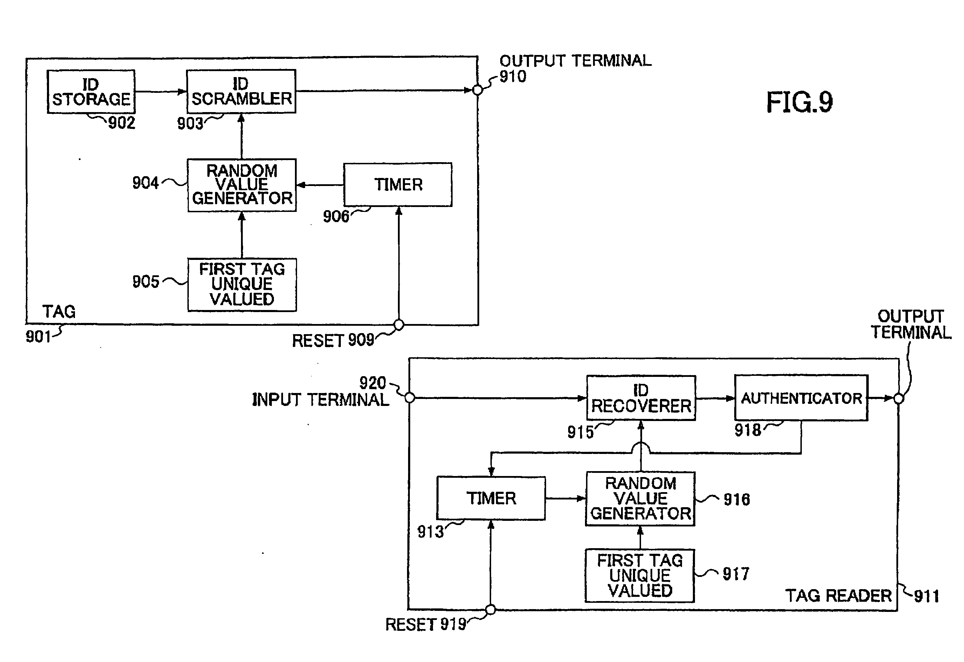

Witch reference to Fig. 9, a method of recognizing the change of the tag ID randomized with the time informations is explained.

In this alternative, a tag reader 911 monitors a tag ID transmitted from a tag 901. The tag 901 randomizes the tag ID with time information from a timer 906; in a similar manner. The timer 906 in the tag 901 and a timer 913 in the tag reader 911 are reset simultaneously.

The timer 913 of the tag reader 911 can be synchronized with the timer 906 of the tag 901 initially, and the tag reader can determine authenticity of tag IDs by utilizing the synchronized timer 913. However, both the timers 906 and 913 operate separately and become different from each other more and more with passing time.

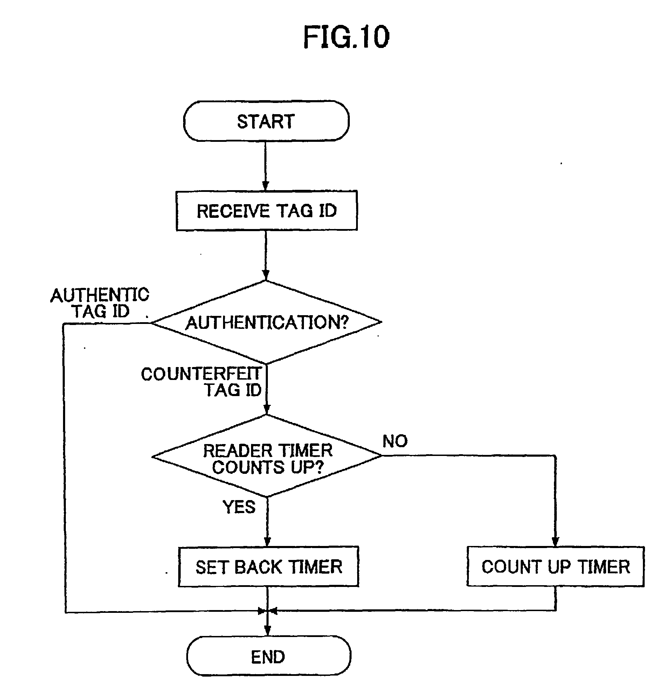

When an authenticator 918 of the tag reader 911 determines that a tag ID is incorrect, the tag reader 911 performs a correction process on the timer 913. The correction process can be done by a method as shown in Fig. 10.

Since the tag reader 911 knows the randomized tang 10 value after resetting, the tag reader can recognize the timer value in the tag 901 by recognizing the received randomized tag ID value. It is also possible to correct the timer 913 to the time when the tag ID has been received.

In the alternative, CRC (Cycle Redundancy Code) generated by the tag ID can be also used.

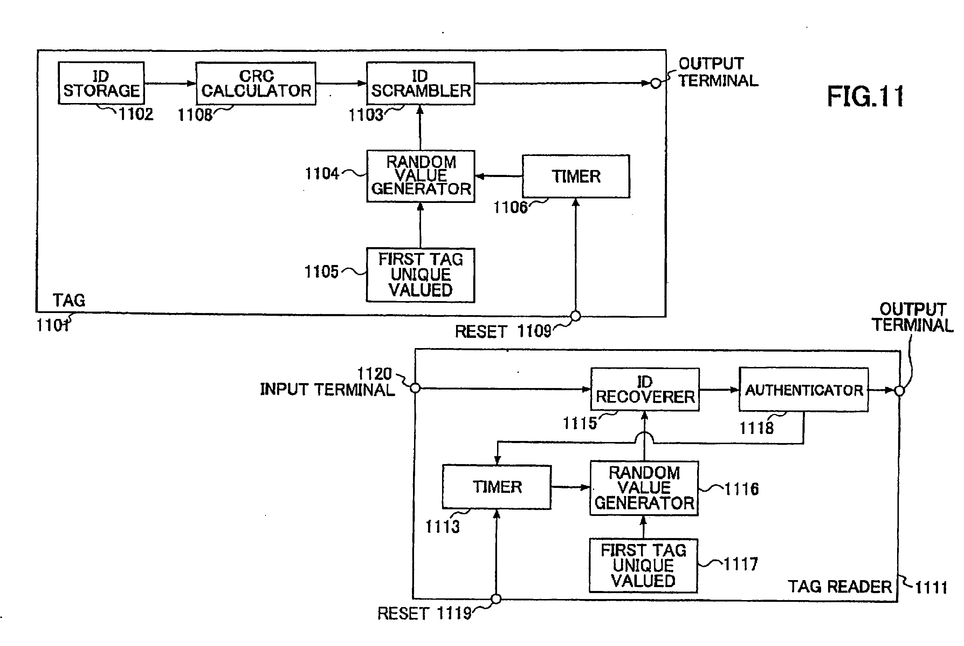

As shown in Fig. 11, based on a tag ID output from an ID storage 1102, a CRC calculator 1108 of a tag 1101 generates a CRC, and mixes the generated CRC and the tag ID and outputs them to an ID scrambler 1103. Other processes are the same as in the above alternative.

An authenticator 1118 of a tag reader 1111 calculates the CRC using a recovered tag ID, and compares the calculated CRC and a received CRC calculated by the tag 1101. If they are the same, the authenticator 1118 determines that the tag ID is authentic, and if they are different, the authenticator 1118 determines that.the tag ID is counterfeit.

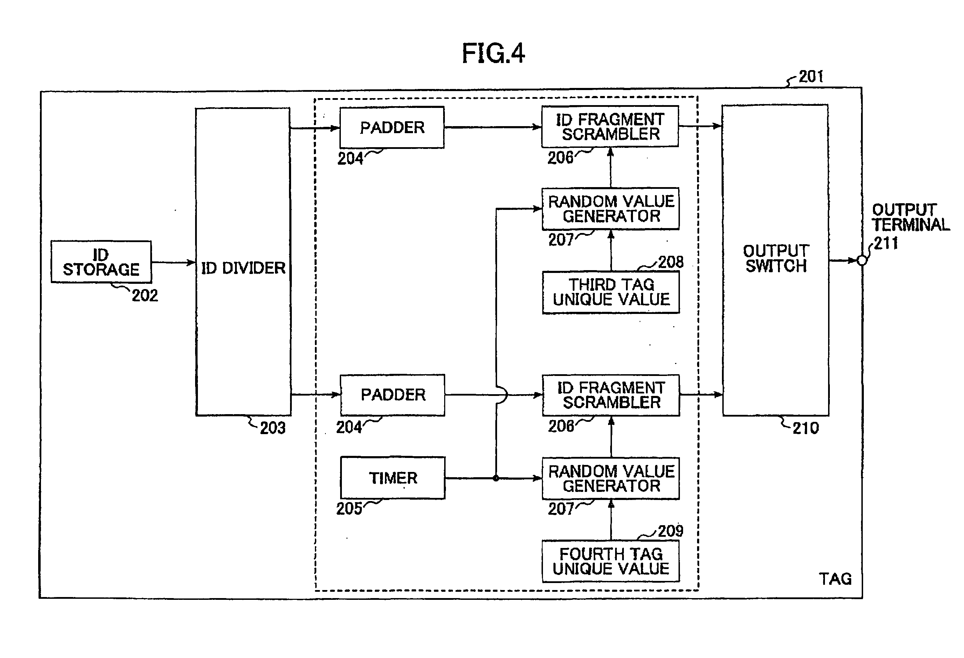

Fig. 4 is a block diagram generally showing an ID tag

A tag 201 comprises an ID storage 202, an ID divider 203, two padders 204, a timer 205, two ID fragment scramblers 206, two random value generators 207, a third tag unique value 208, a fourth tag unique value 209, an output switch 210, and an output terminal 211.

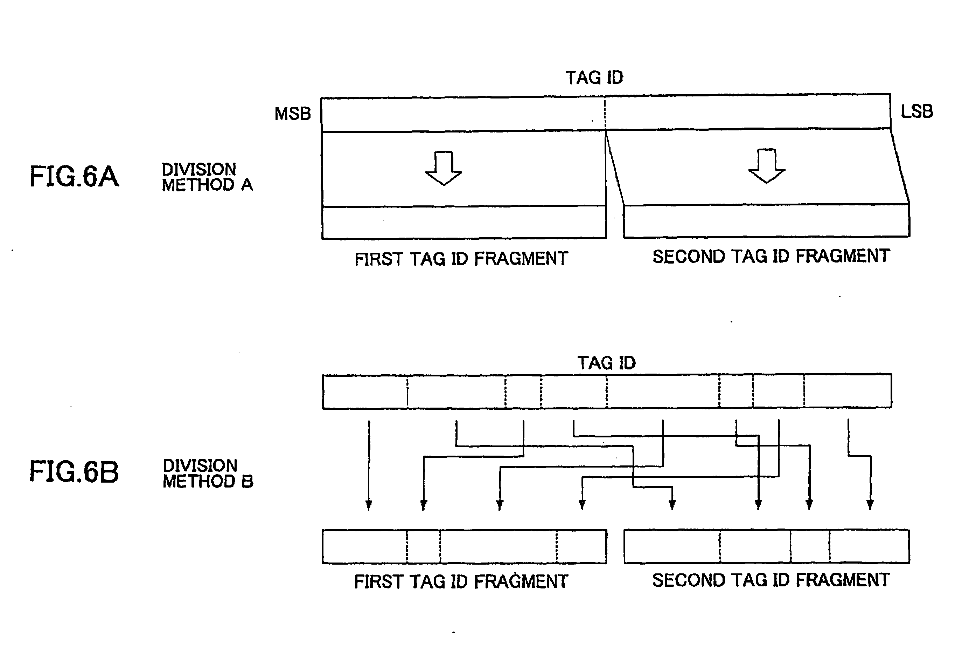

In the 201, a tag ID output from the ID storage 202 is input to the ID divider 203, where the tag is divided into a plurality of tag ID fragments. In this second embodiment, the number of fragments is two, but is not limited to two. The divided tag ID fragments may have the same length or may have different lengths. There may be a variety of dividing methods. As shown in Fig. 6A, the tag ID can be divided into the MSB side and the LSB side. As shown in Fig. 6B, the tag ID can be divided so as to extract specific bits according to a predetermined rule.

The divided tag ID fragments are subject to a padding process (filling with bits process) in the padder 204. For example, a 64-bit tag ID is divided into a 20-bit fragment and a 44-bit fragment, and the 20-bit fragment is padded with 44 bits to lengthen the fragment to the original size and the 44-bit fragment is padded with 24 bits to lengthen it to the original size. Each padder 204 can further scramble the tag ID fragment depending on the tag ID fragment ordering. The first tag ID fragment can be scrambled with a value dependent on the third tag unique value and the second tag ID fragment can be scrambled with a value dependent on the fourth tag unique value. This additional randomization makes it more difficult to counterfeit tag IDs.

After padding, the padded ID fragments are input to the ID scrambler 206.

On the other hand, time information output from the timer 205 is input to the random value generator 207, the same as the first example. The random value generators 207 Perform conversion depending on the third tag unique value 208 and the fourth tag unique value 209, respectively, to convert the time information, to random values dependent on time and outputs them to the corresponding ID scramblers 206.

Each of the ID fragment scramblers 206 uses a random value dependent on the receiving time, scramblers the padded tag ID fragment and outputs it to the output switch 210.

The output switch 210 switches the data received from the ID fragments scramblers 206, and alternately outputs them to the output terminal 211.

The time information is randomized with each tag ID unique value and each of the tag ID fragments is scrambled with the randomized time information.

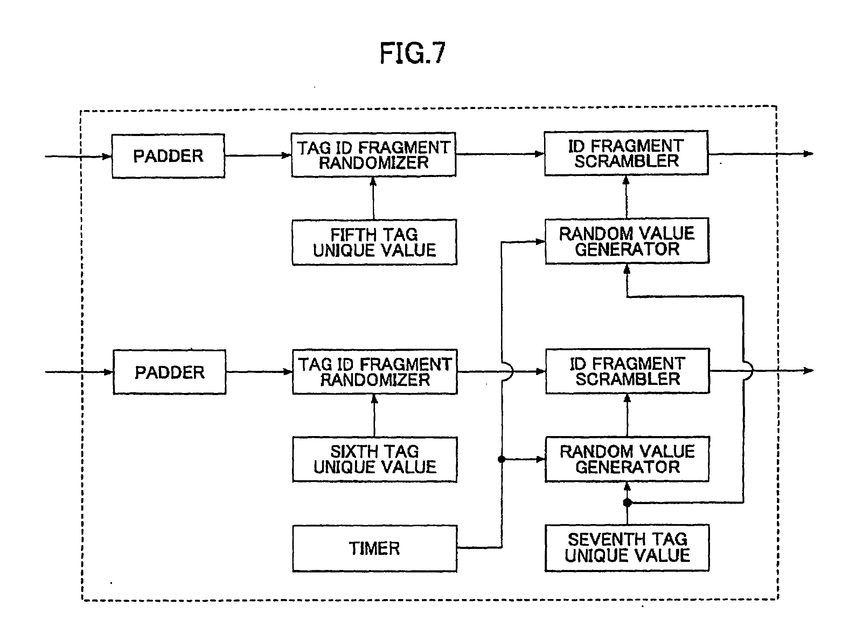

However, as shown in Fig. 7, each of the tag ID fragments can be randomized or scrambled with a corresponding tag ID unique value (a fifth tag unique value, a sixty tag unique value) in a tag ID fragment randomizer, before being input to an ID fragment scrambler. Then each of the randomized tag ID fragments can be scramble with time information randomized with one tag unique value (a seventh unique values) that is independent from the orders of the ID fragments. Fig. 7 illustrates an alternative corresponding to a portion enclosed with a dotted line in Fig. 4.

In a further alternative, the tag ID fragments scrambled with time independent information or time dependent information can be accompanied by scrambles time information as shown in Fig. 2 and Fig. 3.

It is necessary to recover the time information of the tag in a tag reader, and therefore the scrambled time information is desirably transmitted together with the data similar to the Fig. 2. example.

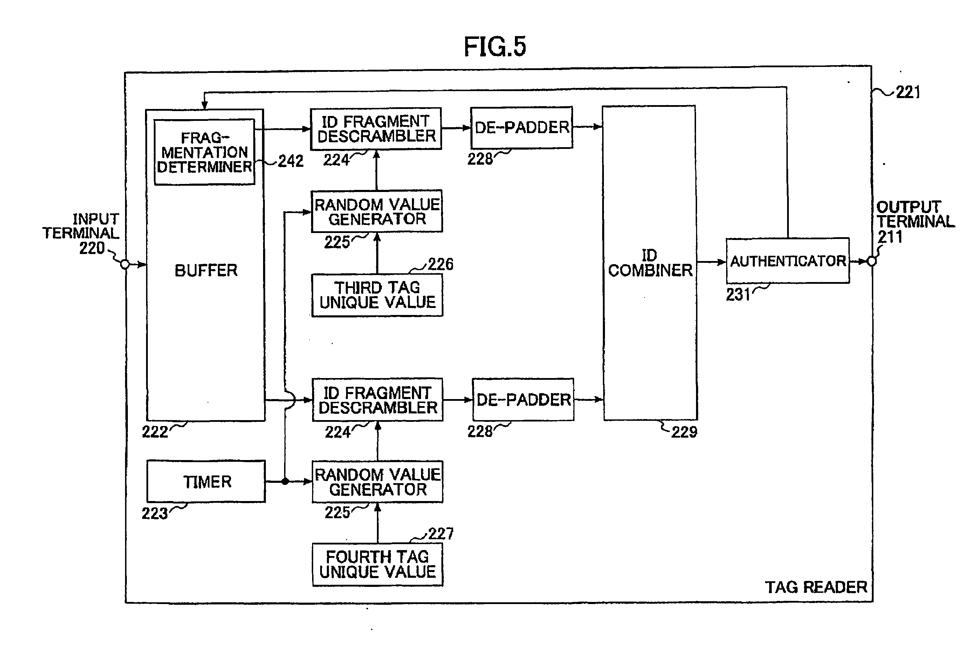

With reference to Fig. 5, a tag reader 221 receiving the tag ID from the tag 201 is explained.

The tag reader 221 has a third tag unique value 226 and a fourth tag unique value 227 the same as the third tag unique value 208 and the fourth tag unique value 209 given to the tag 201, respectively. A method of registering the tag unique values into the tag reader 221 is the same as in the first embodiment.

Plural data items sent from the tag 201 are needed in order to recover the tag ID. The tag 201 data received via an input terminal 220 are first stored in a buffer 222. A fragmentation determiner 242 provided in the buffer 222 determines whether the received tag ID has been fragmented, divides it if fragmented, and outputs the divided fragments into corresponding ID fragment descramblers 224.

When registering the tag ID into the tag reader 221, the timer 205 in the tag 201 and the timer 223 in the tag reader 221 can be reset. The timer 223 can output synchronized time information to each random value generator 225. Each random value generator 225 performs conversion dependent on the third or fourth tag unique value, respectively, converts the time information to a random value dependent on time, and outputs it to the corresponding ID fragment descrambler 224.

Each ID fragment descrambler 224 performs an operation inverse to that of the ID fragments scrambler 206 of the tag 201, to extract a descrambled ID fragment and outputs it to a corresponding de-padder 228.

the de-padder 228 performs an operations inverse to that of the padder 204 in the tag 201, to de-pad (remove) the padded (filling) bits. In a case where scrambling or randomizing dependent on the order of the tag ID fragments has been performed on the tag 201 as shown in Fig. 7, the de-padder 228 can Optionally perform descrambling or de-randomizing to extract the divided tag ID fragments.

The extracted tag ID fragments are input to an ID combiner 229. The ID combiner 229 performs an operation inverse to that of the ID divider 203 of the tag 201 to recover the tag ID.

The recovered tag ID is input to an authenticator 231, which determines whether the combination of recovered tag ID and its unique values:is correct. If it is determined that the combination is incorrect, the division ratio in the buffer 222 is reversed and the same operations are performed again. If it is determined that the combination is still incorrect in the second trial, the resultant tag ID is discarded.

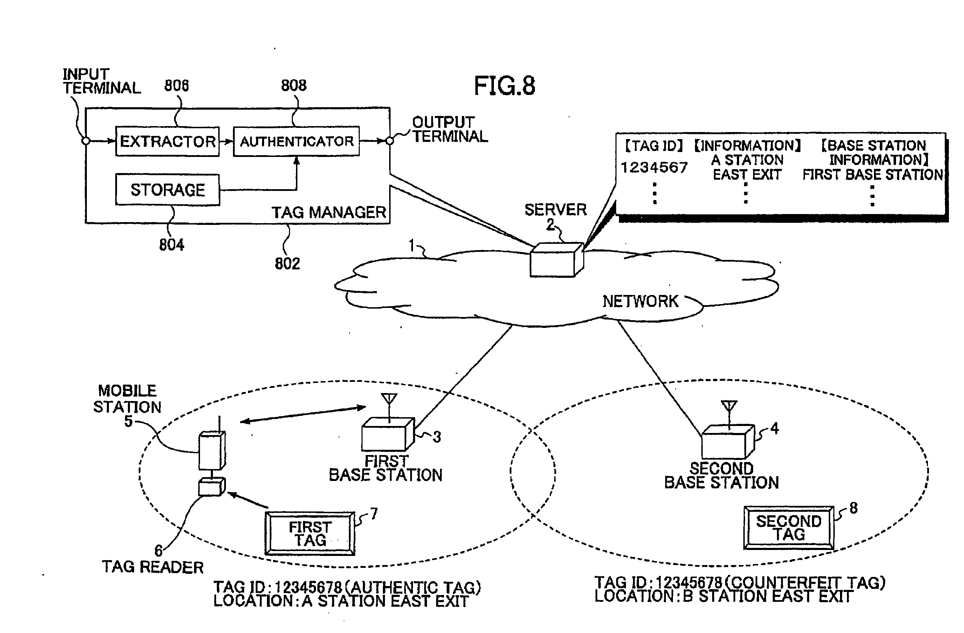

With reference to Fig. 8, a first embodiment of the present invention is explained. Instead of a tag reader, a server has an authenticator.

A server 2 shown in Fig. 8 has a tag manager 802. The tag manager 802 comprises a storage 804. The storage 804 correlates each tag ID, information indicated by the tag ID, and location information of a base station closest to the tag, and is storing the information together as a group. The tag manager 802 receives data including tag ID informations and other information sent from the tag via a mobile station and a base station. If the received data include an extracted tag ID, it is not necessary to have an extractor. If not, an extractor 806 of the tag manager 802 extracts tag ID information, tag location information, and other information. The above mentioned technique can be utilized for extraction. An authenticator 808 compares the received tag ID information and location information with the stored information, and determines whether the received tag ID is authentic.

When a tag reader 6 moves close to a first tag 7 and receives information transmitted by the first tag 7, a mobile station 5 having the tag reader 6 is located in an area belonging to a first base station 3. The mobile station 5 sends an inquiry to the server 2 via the first base station 3 as to whether the first tag 7 is authentic.

The server 2 understands that the inquiry has been transmitted via the first base station 3, and therefore replies to the mobile station 5 that the first tag is authentic.

On the other hand, the tag reader 6 moves close to a second tag reader 8 and receives information transmitted by the second tag 8, the mobile station having the tag reader 6 being located in an area belonging to a second base station 4. The mobile station 5 sends an inquiry to the server 2 via the second base station 4 as to whether the second tag 8 is authentic.

The server 2 understands that the inquiry about the second tag 8 has been transmitted via the second bases station 4, and therefore replies to the mobile station 5 that the second tag 8 is counterfeit.

In this manner, the server holds information of the base stations close to tags, and therefore can determine whether tags are authentic or counterfeit. When the mobile station sends such an inquiry, it can also send information on the location of the mobile station at the time of receiving the information from the tag, and therefore the authenticity of the tag can be determined even when the mobile station sends the inquiry later instead of sending it immediately after receiving the tag information.

The tag manager 802 can be provided not only in the server but also in a base station, a mobile station, or a tag reader. In a case where the tag manager is provided in a mobile station, the information stored in the server can be downloaded to the tag manager in the mobile station and the mobile station can determine the authenticity. Instead of a server, a base station can have a storage for correlating and storing information about each tag, its tag ID, its information, and its location information. A tag reader can determine the authenticity, as in the first and second examples. Each base station can previously send to a server, information of tag IDs of tags located close to the base station.

### [Industrial Applicability]

ID tags, tag readers, ID tag security systems, and ID tag transmission and recovering methods can be utilized for improving the tag services in mobile communication systems.

## Claims

1. A system comprising an ID tag (7) at a fixed location and a tag manager (802) for receiving data RF transmitted from the ID tag (7), via a movable tag reader, the tag manager comprising:
a storage (804) arranged to correlate tag ID information of at least one such ID tag with location information of the ID tag, and to store the correlated informations; and
an authenticator (808) arranged to determine authenticity of the ID tag based on location information of a base station (3) close to the ID tag and tag ID information included in the received data, with reference to the tag ID information and the location information stored in the storage.

2. A system as claimed in Claim 1, wherein the tag manager is arranged to determine the authenticity of the ID tag in response to a request received from another station (4).

3. A system as claimed in Claim 1 or 2, wherein the storage holds tag ID information and location information provided by another station (4), and the authenticity of the ID tag is determined with reference to the ID information and the location information provided by the other station.

## Patentansprüche

1. System, welches ein ID-Etikett (7) an einer festen Stelle und eine Etikettenverwaltung (802) zum Empfangen von Daten aufweist, welche von dem ID-Etikett (7) über einen bewegbaren Etikettenleser HD übertragen werden, wobei die Etikettenverwaltung aufweist:
einen Speicher (804), der eingerichtet ist, die Etiketten-ID-Information von zumindest einem derartigen ID-Etikett mit einer Lageinformation des ID-Etiketts miteinander in Beziehung zu bringen und um die miteinander bezogene Information zu speichern; und
ein Berechtigungsglied (808), welches eingerichtet ist, die Berechtigung des ID-Etiketts auf Basis der Lageinformation einer Basisstation (3) in der Nähe des ID-Etiketts und der Etiketten-ID-Information, welche in den Empfangsdaten enthalten ist, in Bezug auf die Etiketten-ID-Information und die Lageinformation, welche im Speicher gespeichert sind, zu bestimmen.

2. System nach Anspruch 1, wobei die Etikettenverwaltung eingerichtet ist, die Berechtigung des ID-Etiketts als Antwort auf eine Anforderung zu bestimmen, welche von einer anderen Station (4) empfangen wird.

3. System nach Anspruch 1 oder 2, wobei der Speicher Etiketten-ID-Information und Lageinformation, welche durch eine andere Station (4) bereitgestellt werden, hält, und die Berechtigung des ID-Etiketts in Bezug auf die ID-Information und die Lageinformation, welche durch die andere Station bereitgestellt werden, bestimmt wird.

## Revendications

1. Système comprenant une étiquette d'identification (7) à un endroit fixé et un gestionnaire d'étiquette (802) pour recevoir des données transmises par radiofréquence de l'étiquette d'identification (7), par l'intermédiaire d'un lecteur d'étiquette mobile, le gestionnaire d'étiquette comprenant :
une mémoire (804) agencée pour corréler les informations d'identification d'étiquette d'au moins une telle étiquette d'identification avec les informations d'emplacement de l'étiquette d'identification, et pour mémoriser les informations corrélées ; et
un dispositif d'authentification (808) agencé pour déterminer l'authenticité de l'étiquette d'identification sur la base des informations d'emplacement d'une station de base (3) à proximité de l'étiquette d'identification et des informations d'identification d'étiquette comprises dans les données reçues, avec référence aux informations d'identification d'étiquette et aux informations d'emplacement mémorisées dans la mémoire.

2. Système selon la revendication 1, dans lequel le gestionnaire d'étiquette est agencé pour déterminer l'authenticité de l'étiquette d'identification en réponse à une demande reçue d'une autre station (4).

3. Système selon la revendication 1 ou 2, dans lequel la mémoire contient des informations d'identification d'étiquette et des informations d'emplacement fournies par une autre station (4), et l'authenticité de l'étiquette d'identification est déterminée avec référence aux informations d'identification et aux informations d'emplacement fournies par l'autre station.
